# EUROPÄISCHE PATENTSCHRIFT

(11) **EP 0 480 933 B1**
(45) Veröffentlichungstag und Bekanntmachung des Hinweises auf die Patenterteilung: **13.01.1993**
(21) Anmeldenummer: 90907003.9
(22) Anmeldetag: 07.05.1990
(51) Int. Cl.: B60R 21/16

(54) **AUFPRALLSCHUTZVORRICHTUNG MIT EINEM AUFBLASBAREN GASKISSEN IN EINEM FAHRZEUG**
COLLISION PROTECTION DEVICE WITH AN INFLATABLE GAS CUSHION IN A VEHICLE
DISPOSITIF DE PROTECTION ANTI-CHOCS AVEC UN COUSSIN A GAS GONFLABLE DANS UN VEHICULE

(30) Priorität: 07.07.1989 DE 3922364
(43) Veröffentlichungstag der Anmeldung: 22.04.1992
(73) Patentinhaber: AUDI AG, 85045 Ingolstadt (DE)
(72) Erfinder: GRAF, Hans-Peter, D-8074 Gaimersheim (DE)
(74) Vertreter: Engelhardt, Harald
(86) Internationale Anmeldenummer: EP9000737
(87) Internationale Veröffentlichungsnummer: WO9100812

(56) Entgegenhaltungen:
- DE-A- 2 803 624
- DE-A- 3 304 575
- FR-A- 2 131 070
- FR-A- 2 131 669

## Beschreibung

Die Erfindung betrifft eine Aufprallschutzvorrichtung mit einem aufblasbaren Gaskissen in einem Fahrzeug nach dem Oberbegriff des Anspruchs 1 (siehe z.B. DE-C-3 644 554).

Bekannte Aufprallschutzvorrichtungen mit einem aufblasbaren Gaskissen werden von einem Sensor, der einen Auslösefall ermittelt, angesteuert. Dieser Sensor besteht üblicherweise aus einem oder mehreren Beschleunigungssensoren, die die Beschleunigung bzw. Verzögerung des Fahrzeugs messen und bei Überschreiten einer vorgegebenen Grenzverzögerung, die auf einen Fahrzeugunfall schließen läßt, ein Auslösesignal abgeben. Dieses Auslösesignal wird entweder direkt für die Ansteuerung einer oder mehrerer pyrotechnischer Treibladungen verwendet oder einer dem Sensor nachgeschalteten Schalteinheit zugeführt, die ihrerseits die Zündung der Treibladungen auslöst.

Im Falle eines Aufpralls oder Zusammenstoßes wird somit die pyrotechnische Treibladung gezündet, wodurch in wenigen Millisekunden das Gaskissen aufgeblasen wird und einen wirksamen Schutz der Insassen vor dem Aufprall auf Karosserieteile bildet.

Um den mit großer Wucht nach vorne geschleuderten Körper des Insassen weich und ohne Rückfederungstendenz auffangen zu können, ist das Gaskissen mit einer oder mehreren Ausblaseeinrichtungen versehen, durch die beim Aufprall des Insassen auf das Gaskissen das Treibgas gesteuert abströmen kann. Durch diese Öffnungen strömt somit im Laufe der Zeit ein erheblicher Teil der Gase in den Fahrgastraum.

Diese Abbrandgase führen zu einer starken Rauchentwicklung im Fahrgastraum mit unangenehmen Geruch, Reizungen im Nasen- und Rachenbereich und verminderter Sicht. Die in einem Gaskissen enthaltenen und ausströmenden Abbrandgase sind in ihrem Volumen ganz erheblich: In einem Gaskissen am Platz des Fahrers sind etwas 80 Liter enthalten und wenn für den Beifahrer ebenfalls ein Gaskissen vorgesehen ist, kommen nochmals ca. 170 Liter Abbrandgase dazu.

Nach dem Auslösen eines Gaskissens werden durch die Rauchentwicklung, den unangenehmen Geruch durch Schmoren von Dichtungen sowie die Reizungen der Augen-, Rachen- und Nasenschleimhäute die Insassen erheblich verunsichert, da diese Merkmale auch auf einen Fahrzeugbrand hinweisen können. Zudem ist gerade bei einem längeren Einatmen der Abbrandgase eine gesundheitsschädliche Wirkung nicht auszuschließen.

Die vorstehenden Probleme sind bekannt. Um hier eine Verbesserung zu schaffen, wurde bereits vorgeschlagen (DE-C-3 235 176), in dem aufblasbaren Gaskissen einen mit Duftstoffen gefüllten, geschlossenen Behälter anzuordnen, der während des Aufblasvorgangs selbsttätig geöffnet wird. Die dann mit ausströmenden Duftstoffe sollen beim Einatmen der Abbrandgase Reizungen im Nasen- und Rachenbereich verhindern. Hierbei wird aber lediglich den schädlichen Abbrandgasen etwas beigemischt, so daß weder die Rauchentwicklung beeinflußt wird noch schädliche Bestandteile der Abbrandgase entfernt werden.

Ein weiterer, bekannter Vorschlag, hinsichtlich der Abbrandgase eine Verbesserung zu schaffen (DE-C-3 644 554), besteht darin, einen Teil der Wandung des Gaskissens als Filter auszubilden. Dieses Filter soll die bei der Zündung des Treibgases freigesetzten Partikel vom Innenraum des Kraftfahrzeugs fernhalten. Es ist ersichtlich, daß das Filter nur relativ grobmaschig sein kann, da, wie oben ausgeführt, Abbrandgas aus dem gefüllten Gassack ausströmen können muß. Wäre das Filter sehr dicht, würde dieser Ausströmvorgang behindert und damit das Gaskissen in seiner Funktion beeinträchtigt werden. Daraus ergibt sich bereits, daß lediglich relativ große Partikel durch die als Filter ausgebildete Gaskissenwand am Ausströmen gehindert werden können. Diese Partikel sind aber lediglich ein kleiner Teil der Abbrandgase, die die oben genannten, schädlichen und unerwünschten Effekte bringen. Trotz des bekannten Filters tritt somit auch hier ein großer Teil der oben genannten Nachteile auf.

Als Meß- und Kontrolleinrichtung für den Sauerstoffgehalt im Fahrgastraum ist bereits eine Vorrichtung bekannt (JP-A-59-206215), bei der ein Sauerstoffsensor die Sauerstoffkonzentration mißt und beim Unterschreiten eines Grenzwertes Alarm gibt oder ein Gebläse für die Belüftung ansteuert. In einer weiteren, ähnlichen Vorrichtung (JP-A-55-145015) wird die Konzentration von Tabakrauch im Fahrgastraum erfaßt und je nach Höhe der Konzentration werden automatisch die Fenster angesteuert und mehr oder weniger geöffnet. Solche Vorrichtungen sind aufwendig und haben durch die Verwendung von Gassensoren üblicherweise eine größere Ansprechverzögerung, so daß sie für die Lösung des oben genannten Problems mit den Abbrandgasen praktisch nicht geeignet sind.

Ein weiter bekanntes Problem in Verbindung mit aufblasbaren Gaskissen besteht darin, daß während des schnellen Aufblasvorgangs schlagartig eine Druckerhöhung im Fahrgastraum erfolgt, die unangenehm ist und im Extremfall zu Verletzungen der Fahrzeuginsassen führen kann. Um hier eine Verbesserung zu schaffen, ist es bereits bekannt (DE-A-3 312 769 oder DE-B-2 131 479), gleichzeitig mit der Auslösung der pyrotechnischen Treibladung eine Fensterscheibe des Fahrzeugs oder einen Teil einer Fensterscheibe zu zerstören, wodurch die Druckwelle ins Freie abgeleitet werden kann. Eine solche Öffnung ins Freie, die lediglich einen Druckausgleich schaffen soll, braucht nicht groß zu sein und nachdem der Druckausgleich zwischen dem Fahrgastraum und der Umgebung erreicht ist, erfolgt praktisch keine Luftströmung mehr durch den zerstörten Fensterbereich. Dadurch strömen auch die aus dem Gaskissen austretenden Abbrandgase nicht schnell genug aus dem zerstörten Fensterbereich aus dem Fahrgastraum, so daß die oben genannten Probleme hinsichtlich der Abbrandgase auch hier vorliegen.

Weiter ist eine Schaltungsanordnung zum Auslösen von Notschaltfunktionen bei Kraftfahrzeugen bekannt (DE-A-31 16 867), bei der der Sensor für die Ansteuerung eines aufblasbaren Gaskissens auch zur gleichzeitigen Auslösung von Notschaltfunktionen, wie beispielsweise dem Abschalten einer Kraftstoffpumpe, dem Öffnen einer Zentralverriegelungsvorrichtung oder dem Einschalten einer Warnblinkanlage mit verwendet wird

Der Erfindung liegt die Aufgabe zugrunde, eine Aufprallschutzvorrichtung mit einem aufblasbaren Gaskissen so weiterzubilden, daß Beeinträchtigungen von Fahrzeuginsassen durch aus dem Gaskissen ausströmende Abbrandgase verringert werden.

Diese Aufgabe wird bei einer gattungsgemäßen Aufprallschutzvorrichtung mit den kennzeichnenden Merkmalen des Anspruchs 1 gelöst.

Gemäß Anspruch 1 ist der Sensor bzw. eine diesem nachgeschaltete Schalteinheit zusätzlich zu einer Verbindung zu der pyrotechnischen Treibladung auch mit einem Gebläse verbunden. Dieses Gebläse wird bei der Sensorauslösung ebenfalls angesteuert und dient dazu, die aus dem Gaskissen ausströmenden Abbrandgase aus dem Fahrgastraum zu entfernen. Vorteilhaft wird somit das Gebläse gleichzeitig mit der Zündung der Treibladung eingeschaltet, so daß die Gebläsewirkung ohne Verzögerung gegenüber der Zündung eintritt. Bei geeigneter Auslegung des Gebläses werden somit relativ schnell die unangenehmen und schädlichen Abbrandgase aus dem Fahrgastraum herausbefördert.

Nach Anspruch 2 ist dafür ein separates Gebläse vorgesehen, das unmittelbar eine Verbindung zum Fahrgastraum und zur Umgebung hat. Dieses Gebläse wird zweckmäßig so betrieben, daß es aus dem Fahrgastraum die Abbrandgase absaugt. Es könnte aber auch in Gegenrichtung betrieben werden, so daß viel Frischluft in den Fahrgastraum hineingepreßt wird, wodurch die Abbrandgase über die ohnehin vorhandenen Belüftungsausgänge ausgetrieben werden.

Eine besonders bevorzugte Ausführungsform besteht nach Anspruch 3 darin, daß als Gebläse das im Fahrzeug ohnehin vorhandene Gebläse der Lüftungs- oder Klimaanlage verwendet wird. Damit ergibt sich eine besonders kostengünstige Lösung.

Vorteilhaft wird nach Anspruch 4 dieses Gebläse im Auslösefall in seiner maximalen Leistungsstufe angesteuert, um eine möglichst schnelle Entfernung der Abbrandgase zu erreichen.

Das Gebläse kann hier ohne große Zusatzeinrichtungen in der maximalen Leistungsstufe für die Frischluftzufuhr betrieben werden. Dadurch wird viel Frischluft in den Fahrgastraum gepumpt, wodurch die vorher darin enthaltene Luft zusammen mit den Abbrandgasen aus den vorhandenen Entlüftungsöffnungen hinausgedrängt werden.

Eine andere Ansteuerung des ohnehin vorhandenen Gebläses der Klimaanlage besteht nach Anspruch 5 darin, daß das Gebläse in seiner Laufrichtung umgesteuert wird, so daß es im Auslösefall im Saugbetrieb läuft und die Abbrandgase aus dem Fahrgastraum absaugt. Bei entsprechender Ausgestaltung des Gebläses und eventueller Schließung von Belüftungsöffnungen werden die Abbrandgase hierbei schnell abgesaugt.

Als zusätzliche Maßnahme zur Entfernung der Abbrandgase, insbesondere dann, wenn Frischluft in den Fahrgastraum geblasen wird, besteht nach Anspruch 6 darin, daß im Auslösefall zugleich elektrisch betätigbare Fenster und/oder ein elektrisch betätigbares Schiebedach angesteuert und geöffnet werden.

Anhand einer Zeichnung wird die Erfindung weiter erläutert.

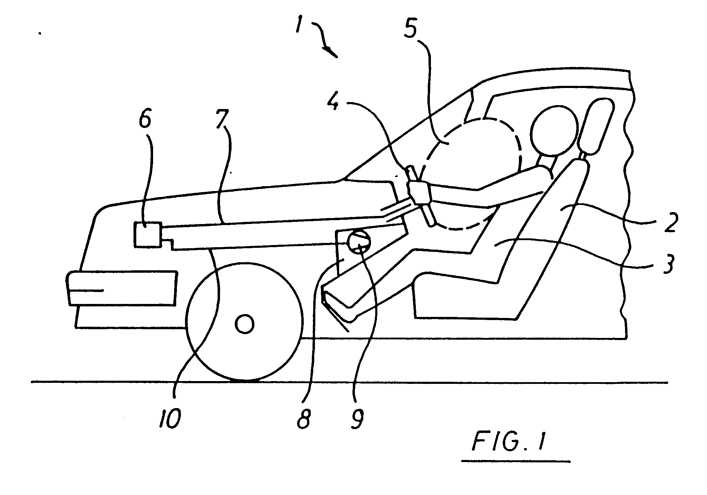

Die einzige Fig. zeigt schematisch den vorderen Teil eines Kraftfahrzeugs 1, in dem auf einem Fahrersitz 2 ein Fahrer 3 sitzt. In der Prallplatte eines Lenkrades 4 ist ein Gaskissen zusammen mit einer pyrotechnischen Treibladung enthalten. Im dargestellten Zustand ist die Treibladung gerade gezündet worden und das Gaskissen 5 hat sich vor dem Fahrer 3 aufgeblasen. Die Ansteuerung der Treibladung erfolgt durch einen Sensor 6, der als Beschleunigungssensor mit einer nachgeschalteten Schalteinheit im vorderen Bereich des Fahrzeugs angeordnet ist. Von dort führt eine Ansteuerleitung 7 zur Treibladung im Lenkrad 4.

Schematisch ist eine Klimaanlage 8 eingezeichnet, die ein Gebläse 9 enthält. Dieses Gebläse 9 wird über eine Steuerleitung 10 ebenfalls vom Sensor 6 angesteuert.

Die dargestellte Einrichtung hat folgende Funktion:
Beim Auslösen des Sensors 6 wird sowohl die pyrotechnische Treibladung gezündet und das Gaskissen 5 aufgeblasen, als auch das Gebläse 9 in seiner höchsten Leistungsstufe eingeschaltet. Aus dem Gaskissen austretende Abbrandgase werden dann schnell aus dem Fahrgas:raum herausgebracht.

## Patentansprüche

1. Aufprallschutzvorrichtung mit einem aufblasbaren Gaskissen (5) in einem Fahrzeug (1),
mit einem am Fahrzeug (1) angebrachten Sensor (6) zur Ermittlung eines Auslösefalles zum Aufblasen des Gaskissens (5),
mit einer pyrotechnischen Treibladung zur Erzeugung des Gases für das Aufblasen des Gaskissens (5), die mit dem Sensor (6) verbunden ist und die durch ein Auslösesignal vom Sensor (6) bzw. einer nachgeschalteten Schalteinheit zündbar ist,
dadurch gekennzeichnet,
daß mit dem Sensor (6) bzw, der Schalteinheit ein Gebläse (9) verbunden ist, das mit dem Auslösen des Gaskissens (5) bzw. mit der Zündung der pyrotechnischen Treibladung zur Entfernung der aus dem Gaskissen (5) ausströmenden Abbrandgase aus dem Fahrgastraum ansteuerbar ist.

2. Aufprallschutzvorrichtung nach Anspruch 1, dadurch gekennzeichnet, daß das Gebläse ein mit dem Fahrgastraum und Außenraum verbundenes, separates Gebläse ist, das nur zur Entfernung der aus dem Gaskissen ausströmenden Abbrandgase aus dem Fahrgastraum verwendet wird.

3. Aufprallschutzvorrichtung nach Anspruch 1, dadurch gekennzeichnet, daß das Gebläse das in der Lüftungs- oder Klimaanlage des Fahrzeugs ohnehin vorhandene Gebläse (9) ist.

4. Aufprallschutzvorrichtung nach Anspruch 3, dadurch gekennzeichnet, daß das Gebläse (9) im Auslösefall in seiner maximalen Leistungsstufe angesteuert wird.

5. Aufprallschutzvorrichtung nach Anspruch 3, dadurch gekennzeichnet, daß das Gebläse (9) in seiner Laufrichtung umgesteuert wird und im Auslösefall im Saugbetrieb läuft, das heißt, die Abbrandgase aus dem Fahrgastraum absaugt.

6. Aufprallschutzvorrichtung nach einem der Ansprüche 1 bis 5, dadurch gekennzeichnet, daß im Auslösefall zusätzlich über den Sensor (6) bzw. der nachgeschalteten Schalteinheit elektrisch betätigbare Fenster und/oder ein Schiebedach angesteuert und geöffnet werden.

## Claims

1. Impact protection device comprising: an inflatable gas cushion (5) in a vehicle (1),
a sensor (16) mounted on the vehicle (1) to detect an event triggering inflation of the gas cushion (5),
and a pyrotechnic propelling charge for generating the gas for inflation of the gas cushion (5), said charge being linked to the sensor (6) and being ignitable by a triggering signal from the sensor (6), or rather from a switch element connected on the load side thereof,
characterised in that
linked to the sensor (6), or switch element, is a blower (9) which can be activated when the gas cushion (5) is triggered, or rather when the pyrotechnic propellant charge is ignited, to remove the combustion gases being discharged by the gas cushion (5) from the passenger compartment.

2. Impact protection device according to claim 1, characterised in that the blower is a separate blower linked to the passenger compartment and exterior and only used to remove the combustion gases being discharged by the gas cushion from the passenger compartment.

3. Impact protection device according to claim 1, characterised in that the blower is the blower (9) that is installed in any case in the vehicle's ventilation or air-conditioning system.

4. Impact protection device according to claim 3, characterised in that in the event of the system being triggered the blower (9) is actuated at its maximum level of performance.

5. Impact protection device according to claim 3, characterised in that the direction of operation of the blower (9) is reversed and operates in suction mode in the event of the system being triggered, in other words evacuates the combustion gases from the passenger compartment.

6. Impact protection device according to one of claims 1 to 5, characterised in that in the event of the system being triggered, electrically operated windows and/or a sliding roof are/is additionally activated and opened via the sensor (6) or switching element connected on the load side thereof.

## Revendications

1. Dispositif de protection contre les collisions avec un coussin pneumatique gonflable (5) dans un véhicule (1),
avec un détecteur (6) monté sur le véhicule (1) pour la détermination d'un cas de déclenchement pour le gonflage du coussin pneumatique (5),
avec une charge propulsive pyrotechnique pour la production du gaz pour le gonflage du coussin pneumatique (5), cette charge étant reliée au détecteur (6) et pouvant être amorcée par un signal de déclenchement venant du détecteur (6) ou d'une unité de commutation montée à la suite,
caractérisé en ce
qu'une soufflante (9) est reliée au détecteur (6) ou à l'unité de commutation et qu'elle peut être commandée par le déclenchement du coussin pneumatique (5) ou par l'amorçage de la charge propulsive pyrotechnique pour expulser de l'habitacle du véhicule les gaz de combustion qui s'échappent du coussin pneumatique (5).

2. Dispositif de protection contre les collisions selon la revendication 1, caractérisé en ce que la soufflante est une soufflante distincte, reliée à l'habitacle du véhicule et à l'extérieur, qui est uniquement utilisée pour expulser de l'habitacle du véhicule les gaz de combustion qui s'échappent du coussin pneumatique.

3. Dispositif de protection contre les collisions selon la revendication 1, caractérisé en ce que la soufflante est une soufflante (9) présente dans l'installation de ventilation ou de conditionnement d'air du véhicule.

4. Dispositif de protection contre les collisions selon la revendication 3, caractérisé en ce que la soufflante (9) est commandée, en cas de déclenchement, à son niveau de puissance maximal.

5. Dispositif de protection contre les collisions selon la revendication 3, caractérisé en ce que la soufflante (9) est inversée dans son sens de marche et que, en cas de déclenchement, elle fonctionne en mode d'aspiration, c'est-à-dire qu'elle extrait les gaz de combustion de l'habitacle du véhicule.

6. Dispositif de protection contre les collisions selon l'une quelconque des revendications 1 à 5, caractérisé en ce que, en cas de déclenchement, des vitres et/ou un toit ouvrant à actionnement électrique sont en outre commandés et ouverts par l'intermédiaire du détecteur (6) ou de l'unité de commutation montée à la suite.
